Europäisches Patentamt

European Patent Office

Office européen des brevets

(11) Publication number: **0 204 289**
**B1**

(12) **EUROPEAN PATENT SPECIFICATION**

(45) Date of publication of patent specification: **24.10.90**

(51) Int. Cl.⁵: **H 02 K 1/22**, H 02 K 1/27, H 02 K 23/04

(21) Application number: **86107423.5**

(22) Date of filing: **02.06.86**

(54) Permanent magnet rotor.

(30) Priority: **05.06.85 JP 120404/85**

(43) Date of publication of application:
**10.12.86 Bulletin 86/50**

(45) Publication of the grant of the patent:
**24.10.90 Bulletin 90/43**

(84) Designated Contracting States:
**DE FR GB**

(56) References cited:
**EP-A-0 043 981**
**FR-A- 501 232**

**RESEARCH DISCLOSURE, no. 207, July 1981, page 251, Havant Hampshire, GB; "Rotor for motors"**

**PATENT ABSTRACTS OF JAPAN, vol. 1, no. 119 (E-77), 11th September 1977, page 4725 E 77; & JP - A - 52 50507**

(73) Proprietor: **HITACHI, LTD.**
**6, Kanda Surugadai 4-chome**
**Chiyoda-ku, Tokyo 100 (JP)**

(72) Inventor: **Yahara, Masataka**
**1-16-19, Sakushindai**
**Chiba-shi Chiba-ken (JP)**
Inventor: **Urayama, Goro**
**1034-4, Yokodo-cho**
**Chiba-shi Chiba-ken (JP)**
Inventor: **Joujima, Yoshiomi**
**5-39-4-104, Narashinodai**
**Funabashi-shi Chiba-ken (JP)**
Inventor: **Sugai, Hiroshi**
**204-127, Jou**
**Sakura-shi Chiba-ken (JP)**

(74) Representative: **Patentanwälte Beetz sen. -**
**Beetz jun. Timpe - Siegfried - Schmitt-Fumian**
**Steinsdorfstrasse 10**
**D-8000 München 22 (DE)**

Courier Press, Leamington Spa, England.

**Description**

The present invention relates to a permanent magnet rotor of the kind referred to in the preamble of patent claim 1.

Such a rotor having permanent magnets as shown in Fig. 14 is known from JP—A—58-123355.

A rotary shaft 1 illustrated in Fig. 14 presents a sectional shape orthogonal to the lengthwise direction thereof, having a plurality of circular-arc portions 3—6 which center round the rotation axis 2 of the rotary shaft 1, and rectilinear portions 7—10 which connect the adjacent circular-arc portions 3 and 4, 4 and 5, 5 and 6, and 6 and 3 with straight lines having no bent part, respectively.

Permanent magnets 11—14 equal in number to the circular-arc portions 3—6 are fixed in opposition to only the rectilinear portions 7—10, respectively.

As compared with a rotor disclosed in the Japanese Utility Model Application No. 55-120283, the rotor of the above structure is easier of working for preventing the permanent magnets 11—14 from turning relative to the rotation axis against torques which act on the magnets.

Research Disclosure No. 207, July 1981, page 251, Havant Hampshire, England, GB; "Rotor for Motors" discloses a rotor having a rather complex structure consisting of different sleeves of a resin between magnetic chips, the core and the rotor shaft.

The present invention has for its object to further improve the rotor disclosed in the aforementioned JP—A—58-123355 such to provide a rotor with an increased output per unit volume.

According to the present invention this object is accomplished with a permanent magnet rotor as claimed in claim 1.

Dependent claims are directed on features of preferred embodiments of the invention.

According to the present invention, a rotary shaft presents a sectional shape orthogonal to the lengthwise direction thereof, having a plurality of circular-arc portions which center round the axis of the rotary shaft, and rectilinear portions which connect the adjacent circular-arc portions with straight lines having no bent part. Respective permanent magnets equal in number to the circular-arc portions are fixed in close contact or at uniform intervals while extending over the circular-arc portions and the rectilinear portions. In addition, the surface of each of the permanent magnets remote from the rotary shaft presents a sectional contour orthogonal to the lengthwise direction of the rotary shaft, forming a circular arc which juts out. These features are effective to fabricate a rotor which exhibits improved magnetic characteristics and which is structurally immune against torque reactions acting on the permanent magnets.

Brief description of the drawings

Fig. 1, Fig. 5, Fig. 8, Fig. 9, Fig. 10 and Fig. 13 are sectional views each showing an embodiment of a permanent magnet rotor according to the present invention;

Fig. 2 is a diagram showing the symbols of dimensions in a rotary electric machine which comprises the rotor shown in Fig. 1;

Fig. 3 is a diagram of a B—H curve which is used for explaining the merit of the rotor shown in Fig. 1;

Fig. 4 is a diagram showing the magnetomotive force waveforms of the rotors shown in Figs. 1 and 5 and a prior-art rotor;

Fig. 6 is a diagram of a magnetomotive force waveform demonstrated when the machine shown in Fig. 2 is operated as a synchronous machine;

Fig. 7 is a vector diagram in the case where the rotor of the present invention is operated as a synchronous machine;

Fig. 11 is a diagram of a magnetomotive force waveform demonstrated when the rotor shown in Fig. 10 is operated as a D.C. machine;

Fig. 12 is a vector diagram in the case where the rotor shown in Fig. 10 is operated as the D.C. machine; and

Fig. 14 is a sectional view showing a known rotor.

Description of the preferred embodiments:

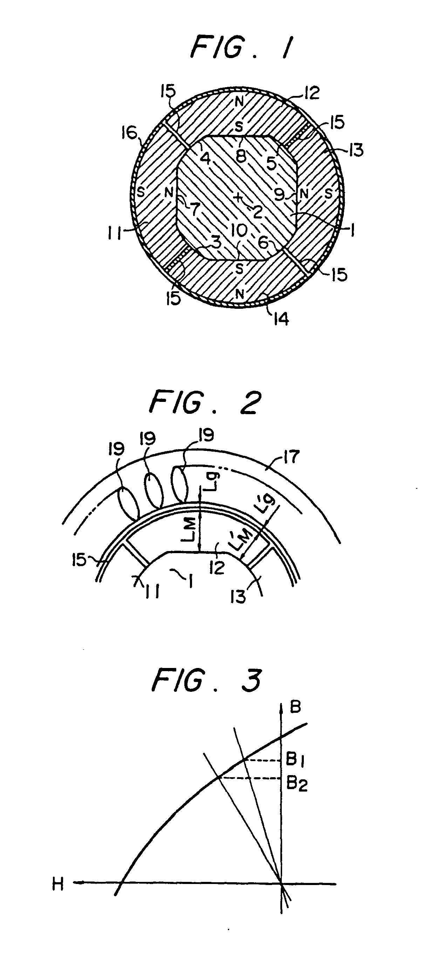

Now, an embodiment of the present invention shown in Fig. 1 will be described. The figure illustrates four poles. Numeral 1 designates a rotary shaft, and numeral 2 the rotation axis of the rotary shaft. The rotary shaft 1 presents a sectional contour orthogonal to the lengthwise direction thereof, having circular-arc portions 3—6 which are equal in number to the poles and which center round the axis 2, and rectilinear portions 7—10 which connect the adjacent circular-arc portions 3 and 4, 4 and 5, 5 and 6, and 6 and 3 with straight lines having no bent portion, respectively.

Permanent magnets 11—14 are disposed in the same number as that of the poles, and each of these permanent magnets is fixed to two of the circular-arc portions and the rectilinear portion between these two circular-arc portions in close contact or at a uniform interval.

By way of example, the permanent magnet 11 is fixed to the two circular-arc portions 3, 4 and the rectilinear portion 7 between them by the use of an adhesive not shown, while the permanent magnet 12 is fixed to the two circular-arc portions 4, 5 and the rectilinear portion 8 between them by the use of the adhesive not shown.

The permanent magnets 11 and 13 are so magnetised that their outer peripheral surfaces exhibit S-pole, and the permanent magnets 12 and 14 are so magnetized that their outer peripheral surfaces exhibit N-poles.

The adjacent permanent magnets 11 and 12, 12 and 13, 13 and 14, and 14 and 11 are bonded, desirably through members of a nonmagnetic material 15.

The center of a circle formed by the outer peripheries of the permanent magnets 11—14 lies on the axis 2.

A binder 16 is wound round the circle formed by the outer peripheries of the permanent magnets 11—14.

Centrifugal forces acting on the permanent magnets 11—14 are countered with the binder 16 and the adhesive interposed between the rotary shaft 1 and the respective permanent magnets 11—14, and torque reactions are parried with the rectilinear portions 7—10 of the rotary shaft 1.

According to this embodiment, there is the effect that a magnetic flux distribution based on the permanent magnets 11—14 approximates to a sinusoidal wave. It is well known as to rotary electric machines that the magnetic flux distribution close to the sinusoidal wave is desirable when the enhancement of a precise control or the reduction of noise or vibrations is intended.

A magnetic flux density to be established by the permanent magnets 11—14 is determined by the properties of materials and the operating point of a magnetic circuit including the permanent magnets. The operating point is given as the intersection point between a demagnetization curve and a straight line whose gradient is a permeance coefficient. The permeance coefficient $P_g$ is given by

$$P_g = L_m/A_m \times A_g/L_g$$

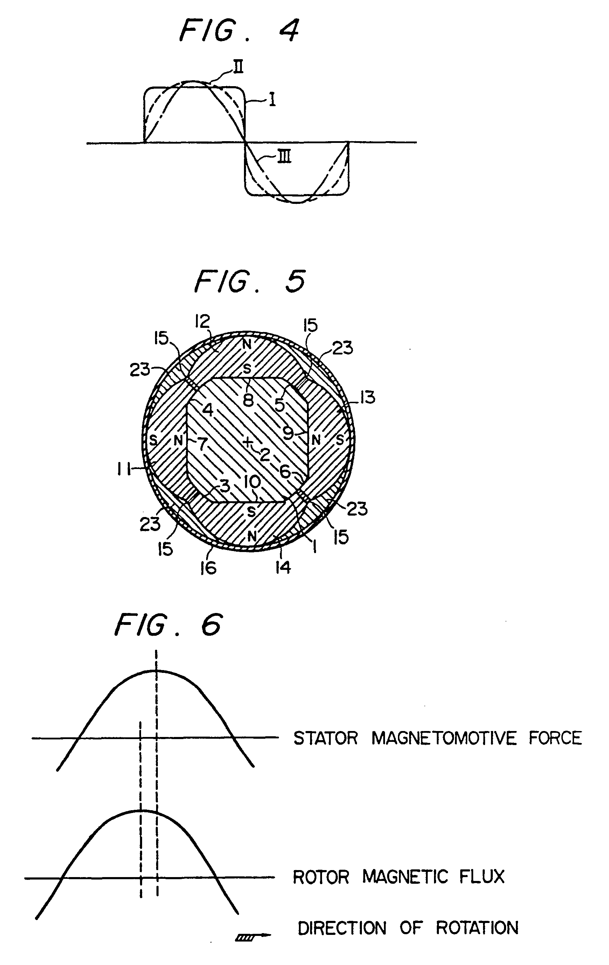

[$L_m$: magnet thickness, $A_m$: magnet area, $A_g$: gap area, $L_g$: gap length between an armature core 17 and the outer peripheral surface of each of the permanent magnets 11—14 (refer to Fig. 2)]. In case of the magnets of the shape in Fig. 1, therefore, the permeance coefficient becomes large in the middle part of great thickness $L_M$ and becomes small in the end part of small thickness $L_M'$. As regards a magnetic flux density at the operating point, accordingly, the flux density $B_1$ of the middle part becomes higher than that $B_2$ of the end part as illustrated in Fig. 3. The magnetic flux waveform which is established by a magnet of uniform thickness becomes a rectangle with somewhat rounded shoulders as shown at I in Fig. 4 because some flux leaks at the end parts of a pole. In contrast, when the middle part is made thicker as in the present embodiment, a magnetic flux waveform having a high middle part as shown at II in Fig. 4 is obtained owing to the difference of the permeance coefficients mentioned above. The broken line II is closer to a sinusoidal wave than the solid line I. That is, according to the present embodiment, the ratio of fundamental wave/total effective value is great, so that a rotary electric machine of high utilization factor of the magnetic flux and good controllability can be fabricated. A horizontal axis H in Fig. 3 indicates the electromotive force, and numeral 19 in Fig. 2 indicates an armature slot.

An embodiment in Fig. 5 is an example wherein the difference of the thicknesses is more enlarged to bring the magnetic flux waveform still closer to the sinusoidal wave as shown at III in Fig. 4.

In case of this embodiment, the center of the circular arc of the outer peripheral surface of each of permanent magnets 11—14 deviates toward the side of the permanent magnet with respect to the rotation axis 2 of a rotary shaft 1. Numeral 23 designates a compound, and numeral 16 a binder.

Since a demagnetization yield strength is proportional to the thickness of a magnet, the former is enhanced by increasing the latter.

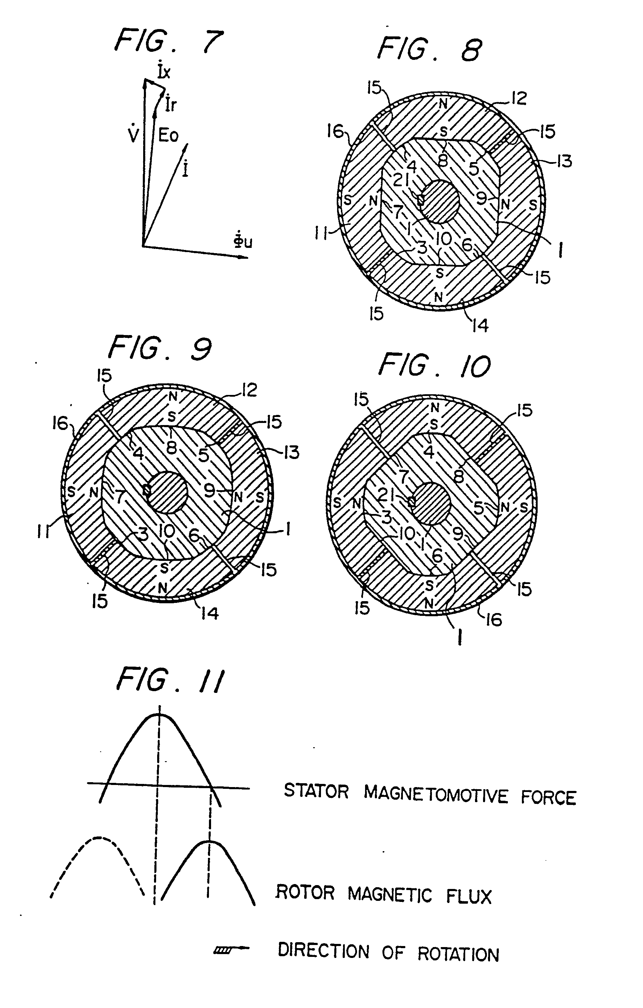

In a case where a permanent-magnet rotary electric machine is operated as a synchronous motor, the magnetic field of a rotor revolves with a slight lag over the revolving magnetic field of a stator as illustrated in Fig. 6. A vector diagram in this case is shown in Fig. 7. $\dot{o}_u$ denotes a rotor magnetic flux, $\dot{I}$ an armature current, r an armature resistance, X a synchronous reactance, $E_0$ an induced voltage, and $\dot{V}$ a supply voltage. Accordingly, a demagnetizing field in this operation arises in a deceleration mode in which a torque reverse to the direction of rotation is produced, and it becomes great near the middle of a pole and small at the end part thereof. When, in consideration of this phenomenon, the permanent magnet is so shaped as to be thick at the middle part of the pole and thin at the end parts, a high demagnetization yield strength can be attained without increasing the volume considerably.

Fig. 8 shows an example wherein a rotary axis 2 is provided within the rotary shaft 1 and the rotary shaft 1 is prevented from turning by means of a key 21 and wherein the outer surface of a snugly-fitted rotary shaft 1 is provided with circular-arc portions 3—6 and rectilinear portions 7—10. Fig. 9 shows an example wherein small-diameter circular-arc portions indicated at numerals 3—6 are connected by gentle curve portions 7—10 which are gentler in curvature than the small-diameter circular-arc portions.

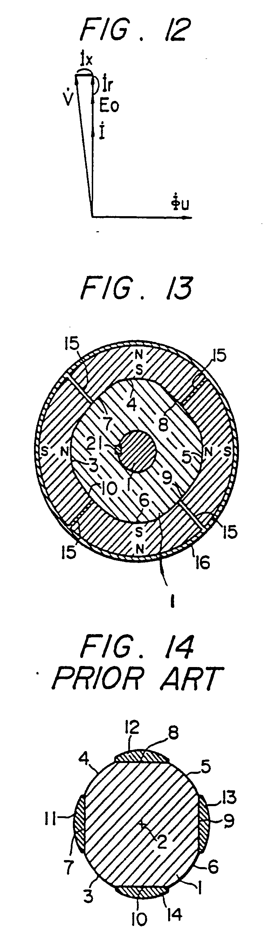

As example in Fig. 10 is advantageous when a permanent-magnet rotary electric machine is rotated in the mode of a D.C. machine, namely, as a no-commutator motor. A vector diagram in the case of the D.C. machine is shown in Fig. 12. In the mode of the D.C. machine, the magnetic field of a stator is controlled so as to shift by 90° in terms of an electrical angle from the magnetic field of a rotor as illustrated in Fig. 11. Therefore, a demagnetizing field becomes great at the end parts of a pole and small at the middle part thereof contrariwise to the mode of the synchronous motor described before. Accordingly, when the magnet is so shaped that the end parts of the pole are thicker as shown in Fig. 10, a structure which is efficient as to the demagnetization yield strength is obtained. In this embodiment, each of the permanent magnets 11—14 is fixed to two rectilinear portions and a circular-arc portion located between them. Fig. 13 shows an example wherein small-diameter circular-arc portions indicated at numerals 3—6 are connected by gentle curve portions 7—10 which are gentler in curvature than the small-diameter circular-arc portions.

**Claims**

1. A permanent magnet rotor comprising the facts that a rotary shaft (1) presents a sectional shape orthogonal to a lengthwise direction thereof, having a plurality of circular-arc portions (3—6) which jut out, and rectilinear portions (7—10) which connect the adjacent circular-arc portions (3—6) with substantially straight lines having no bent part, that respective permanent magnets (11—14) equal in number to said circular-arc portions (3—6) and that a surface of said each permanent magnet (11—14) remote from said rotary shaft (1) presents a sectional shape orthogonal to the lengthwise direction of said rotary shaft, forming a circular arc which juts out, characterized in that said respective permanent magnets (11—14) are fixed extending over said circular-arc portions (3—6) and said rectilinear portions (7—10) in close contact therewith or at uniform intervals therefrom.

2. A permanent magnet rotor according to claim 1, wherein said plurality of circular-arc portions (3—6) center round the axis (2) of said rotary shaft (1).

3. A permanent magnet-rotor according to claim 1 or 2, wherein said circular arc is further formed in such a manner that the center of said circular arc deviates toward said permanent magnet with respect to the axis (2) of said rotary shaft (1).

4. A permanent magnet rotor according to claim 1 or 2 or 3, wherein a rotary shaft is provided which is snugly fitted on a rotary axis with its turning prevented presents a sectional contour orthogonal to a lengthwise direction of said rotary shaft (1).

5. A permanent magnet rotor according to claim 1 or 2, wherein said each permanent magnet (11—14) is fixed to two of said rectilinear portions (7—10) and one of said circular-arc portions is located between the two rectilinear portions.

6. A permanent magnet rotor according to claim 1 or 2, wherein said each permanent magnet (11—14) is fixed to two of said circular-arc portions (3—6) and one of said rectilinear portions is located between the two circular-arc portions (3—6).

7. A permanent magnet rotor according to claim 1 or 2, wherein mounting surfaces of said permanent magnets (11—14) are so shaped as to have a plurality of small-diameter circular-arc portions which center round a rotation axis (2) of a rotary shaft (1), and wherein gentle curve portions are located between the adjacent small-diameter circular-arc portions (3—6) and are gentler in curvature than said small-diameter circular-arc portions (3—6).

8. A permanent magnet rotor according to claim 7, wherein said each permanent magnet (11—14) is fixed to two of said gentle curve portions and one of said small-diameter circular-arc portions is located between the two gentle curve portions.

9. A permanent magnet rotor according to claim 7 wherein said each permanent magnet (11—14) is fixed to two of said small-diameter circular-arc portions (3—6) and one of said gentle curve portions is located between the two small-diameter circular-arc portions (3—6).

**Patentansprüche**

1. Dauermagnetläufer, umfassend die Merkmale: daß eine Welle (1) orthogonal zu einer Längsrichtung derselben eine Querschnittsform aufweist mit mehreren vorspringenden Kreisbogenabschnitten (3—6) und geradlinigen Abschnitten (7—10), die angrenzende Kreisbogenabschnitte (3—6) mit im wesentlichen Geraden, die keinen Bogen aufweisen, verbinden, daß gleich viele Permanentmagnete (11—14) wie Kreisbogenabschnitte (3—6) vorgesehen sind, und daß eine von der Welle (1) entfernte Oberfläche jedes Permanentmagneten (11—14) eine zur Längsrichtung der Welle orthogonale Querschnittsform aufweist, die einen vorspringenden Kreisbogen bildet, dadurch gekennzeichnet, daß die jeweiligen Permanentmagnete (11—14) so befestigt sind, daß sie über die Kreisbogenabschnitte (3—6) und die geradlinigen Abschnitte (7—10) in engem Kontakt damit oder gleichbeabstandet davon verlaufen.

2. Permanentmagnetläufer nach Anspruch 1, wobei die mehreren Kreisbogenabschnitte (3—6) um die Achse (2) der Welle (1) zentriert sind.

3. Permanentmagnetläufer nach Anspruch 1 oder 2, wobei der Kreisbogen ferner so ausgebildet ist, daß der Mittelpunkt des Kreisbogens in Richtung zum Permanentmagneten relativ zur Achse (2) der Welle (1) abweicht.

4. Permanentmagnetläufer nach Anspruch 1 oder 2 oder 3, wobei eine Welle vorgesehen ist, die auf einer Drehachse drehfest satt passend angeordnet ist und eine in Längsrichtung der Welle (1) orthogonale Querschnittsform aufweist.

5. Permanentmagnetläufer nach Anspruch 1 oder 2, wobei jeder Pemanentmagnet (11—14) an zwei der geradlinigen Abschnitte (7—10) befestigt ist und zwischen diesen einer der Kreisbogenabschnitte angeordnet ist.

6. Permanentmagnetläufer nach Anspruch 1 oder 2, wobei jeder Permanentmagnet (11—14) an zwei der Kreisbogenabschnitte (3—6) befestigt ist und zwischen diesen einer der geradlinigen Abschnitte angeordnet ist.

7. Permanentmagnetläufer nach Anspruch 1 oder 2, wobei Befestigungsflächen der Permanentmagnete (11—14) so geformt sind, daß sie mehrere durchmesserkleine Kreisbogenabschnitte haben, die um eine Drehachse (2) einer Welle (1) zentriert sind, und wobei zwischen den benachbarten durchmesserkleinen Kreisbogenabschnitten (3—6) sanfte Kurvenabschnitte angeordnet sind, deren Krümmung sanfter als die der durchmesserkleinen Kreisbogenabschnitte (3—6) ist.

8. Permanentmagnetläufer nach Anspruch 7, wobei jeder Permanentmagnet (11—14) an zwei der sanften Kurvenabschnitte befestigt ist und zwischen diesen einer der durchmesserkleinen Kreisbogenabschnitte angeordnet ist.

9. Permanentmagnetläufer nach Anspruch 7, wobei jeder Permanentmagnet (11—14) an zwei der durchmesserkleinen Kreisbogenabschnitte (3—6) befestigt ist und zwischen diesen einer der sanften Kurvenabschnitte angeordnet ist.

**Revendications**

1. Rotor à aimants permanents, dans lequel un arbre rotatif (1) possède une forme en coupe perpendiculairement à la direction longitudinale du rotor, présentant une pluralité de parties saillantes en forme d'arcs de cercle (3—6), et des parties rectilignes (7—10) qui raccordent les parties en forme d'arcs de cercle voisines (3—6) par des lignes sensiblement rectilignes n'ayant aucune partie courbe, que des aimants permanents respectifs (11—14) sont présents en un nombre égal à celui desdites parties en forme d'arcs de cercle (3—6) et qu'une surface de chacun desdits aimants permanents (11—14), distante dudit arbre rotatif (1), possède une forme en coupe perpendiculairement à la direction longitudinale dudit arbre rotatif, délimitant un arc de cercle saillant, caractérisé en ce que lesdits aimants permanents respectifs (11—14) sont fixés de manière à s'étendre sur lesdites parties en forme d'arcs de cercle (3—6) et sur lesdites parties rectilignes (7—10) en étant en contact intime avec ces parties ou en en étant séparés par des intervalles uniformes.

2. Rotor à aimants permanents selon la revendication 1, dans lequel ledit ensemble de parties en forme d'arcs de cercle (3—6) est centré sur l'axe (2) dudit arbre rotatif (1).

3. Rotor à aimants permanents selon la revendication 1 ou 2, dans lequel ledit arc de cercle est en outre conformé de telle sorte que son centre est écarté en direction dudit aimant permanent par rapport à l'axe (2) dudit arbre rotatif (1).

4. Rotor à aimants permanents selon la revendication 1 ou 2 ou 3, il est prévu un arbre rotatif qui est monté d'une manière ajustée sur un axe de rotation en y étant bloqué en rotation et présente un contour en coupe perpendiculaire à sa direction longitudinale.

5. Rotor à aimants permanents selon la revendication 1 ou 2, dans lequel chacun desdits aimants permanents (11—14) est fixé à deux desdites parties rectilignes (7—10), et l'une desdites parties en forme d'arcs de cercle est située entre les deux parties rectilignes.

6. Rotor à aimants permanents selon la revendication 1 ou 2, dans lequel chacun desdits aimants permanents (11—14) est fixé à deux desdites parties en forme d'arcs de cercle (3—6), et l'une desdites parties rectilignes est située entre les deux parties en forme d'arcs de cercle (3—6).

7. Rotor à aimants permanents selon la revendication 1 ou 2, dans lequel des surfaces de montage desdits aimants permanents (11—14) sont agencées de manière à posséder une pluralité de parties en forme d'arcs de cercle de faible diamètre, qui sont centrées sur un axe de rotation (2) d'un arbre rotatif (1), et dans lequel des parties légèrement courbes sont situées entre les parties voisines en forme d'arcs de cercle de faible diamètre (3—6) et possèdent une courbure plus faible que lesdites parties en forme d'arcs de cercle de faible diamètre (3—6).

8. Rotor à aimants permanents selon la revendication 7, dans lequel chacun desdits aimants permanents (11—14) est fixé à deux desdites parties légèrement courbes, et l'une desdites parties en forme d'arcs de cercle de faible diamètre est située entre deux parties légèrement courbes.

9. Rotor à aimants permanent selon la revendication 7, dans lequel chacun desdits aimants permanents (11—14) est fixé à deux desdites parties en forme d'arcs de cercle de faible diamètre (3—6), et l'une desdites parties légèrement courbes est située entre les deux parties en forme d'arcs de cercle de faible diamètre (3—6).

FIG. 1

FIG. 2

FIG. 3

FIG. 4

FIG. 5

FIG. 6

STATOR MAGNETOMOTIVE FORCE

ROTOR MAGNETIC FLUX

DIRECTION OF ROTATION

FIG. 7

FIG. 8

FIG. 9

FIG. 10

FIG. 11

STATOR MAGNETOMOTIVE FORCE

ROTOR MAGNETIC FLUX

DIRECTION OF ROTATION

3

## FIG. 12

## FIG. 13

## FIG. 14
## PRIOR ART